# EUROPEAN PATENT APPLICATION

(11) **EP 4 092 552 A1**
(43) Date of publication of application: **23.11.2022**
(21) Application number: 20913320.6
(22) Date of filing: 11.12.2020
(51) Int. Cl.: G06F 21/55

(54) **ABNORMALITY DETECTION METHOD, PROGRAM, AND ABNORMALITY DETECTION SYSTEM**

(30) Priority: 14.01.2020 WO PCT/JP2020/000920
(71) Applicant: Panasonic Intellectual Property Corporation of America, Torrance, CA 90504 (US)
(72) Inventor: UJIIE, Yoshihiro, Osaka-shi, Osaka (JP); KISHIKAWA, Takeshi, Osaka-shi, Osaka (JP); HIRANO, Ryo, Osaka-shi, Osaka (JP); HAGA, Tomoyuki, Osaka-shi, Osaka (JP)
(74) Representative: Grünecker Patent- und Rechtsanwälte PartG mbB
(86) International application number: PCT/JP2020/046434
(87) International publication number: WO 2021/145116

(57) **Abstract**

An anomaly detection method in an in-vehicle network system in which a plurality of ECUs are connected. Among the plurality of ECUs, at least one ECU includes a detector which determines whether a received message satisfies a predetermined rule, and the at least one ECU transmits the detection result determined to a network. The anomaly detection method includes (i) receiving the detection result from the network, and storing the detection result received in a memory, (ii) determining whether the detection result is received within a predetermined time, and storing a determination result in the memory in association with the detection result, and (iii) outputting a message to the outside, the message including the detection result in association with the determination result.

## Description

### [Technical Field]

The present disclosure relates to an anomaly detection method for detecting anomaly in an in-vehicle network system, a program, and an anomaly detection system.

### [Background Art]

In systems for automobiles in these days, a large number of devices called electronic control units (ECUs) are disposed. A network connecting these ECUs is called an in-vehicle network. There are a large number of standards for the in-vehicle network. Among these, one of the most predominant in-vehicle networks is a standard called controller area network (CAN), which is specified by ISO11898-1. The communication path in the CAN is configured of two buses, and each ECU connected to the buses is called a node. Each node connected to the bus transmits and receives messages called frames. In CAN, there is no identifier indicating a destination node or a transmitter node, and the transmitter node transmits frames with IDs called message IDs, and the receiver node receives only frames with predetermined message IDs. Such a configuration leads to a risk of unauthorized control of an automobile by connecting an ECU to the buses of the CAN, and transmitting a frame containing an anomaly control command to a legitimate ECU from the spoofing ECU.

To address the risk, generally, a method of detecting an unauthorized message by transmitting a message while a message authentication code (hereinafter, MAC) is added to its data field in CAN (PTL 1) is proposed. As an approach to detect an unauthorized message without using a cipher key, a method of detecting injection of an unauthorized message by observing the cycle between messages (PTL 2) is proposed.

### [Citation List]

### [Patent Literature]

[PTL 1] Japanese Patent No. 5770602
[PTL 2] Japanese Patent No. 5919205

### [Summary of Invention]

### [Technical Problem]

However, in PTL 1, the detection of an unauthorized message is implemented by retaining the cipher key in two nodes. This leads to problems such that cost is high and the cipher key is invalidated when leaked. In PTL 2, in the case where detection of the injection of an unauthorized message by observing the cycle or the like is performed alone, the function of detection itself is the target to be attacked, thereby invalidating the function of detection.

Thus, in order to solve these problems above, an object of the present disclosure is to provide an anomaly detection method which enables implementation of a safer in-vehicle network system.

### [Solution to Problem]

To achieve the above object, the anomaly detection method according to one aspect of the present disclosure is an anomaly detection method in an in-vehicle network system in which a plurality of electronic control units are connected. At least one electronic control unit among the plurality of electronic control units: includes a detector which determines whether a received message satisfies a predetermined rule, and transmits a detection result determined to a network. The anomaly detection method includes (i) receiving the detection result from the network, and storing the detection result received in a memory; (ii) determining whether the detection result is received within a predetermined time, and storing a determination result in the memory in association with the detection result; and (iii) outputting a message to an outside, the message including the detection result in association with the determination result.

### [Advantageous Effects of Invention]

The present disclosure can implement a safer in-vehicle network system.

### [Brief Description of Drawings]

[FIG. 1]

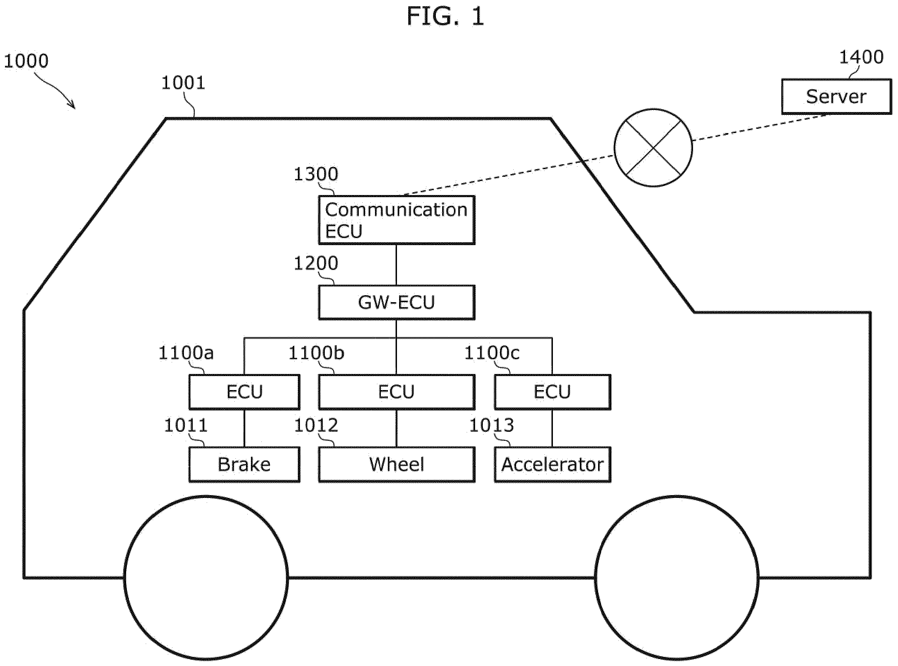

   FIG. 1 is a diagram illustrating one example of an overall configuration of the in-vehicle network system according to Embodiment 1.
[FIG. 2]

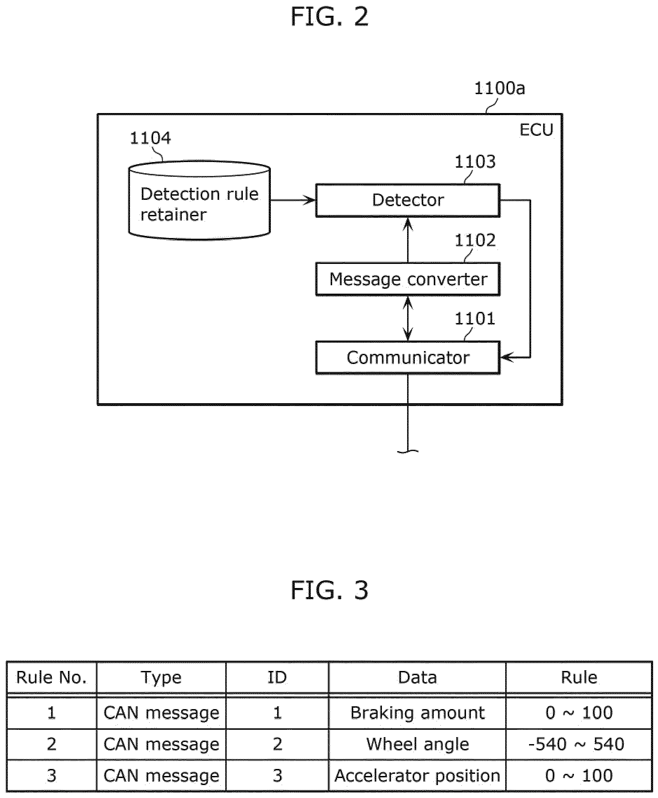

   FIG. 2 is a diagram illustrating one example of a configuration of the ECU according to Embodiment 1.
[FIG. 3]
   FIG. 3 is a diagram illustrating one example of the detection rule according to Embodiment 1.
[FIG. 4]

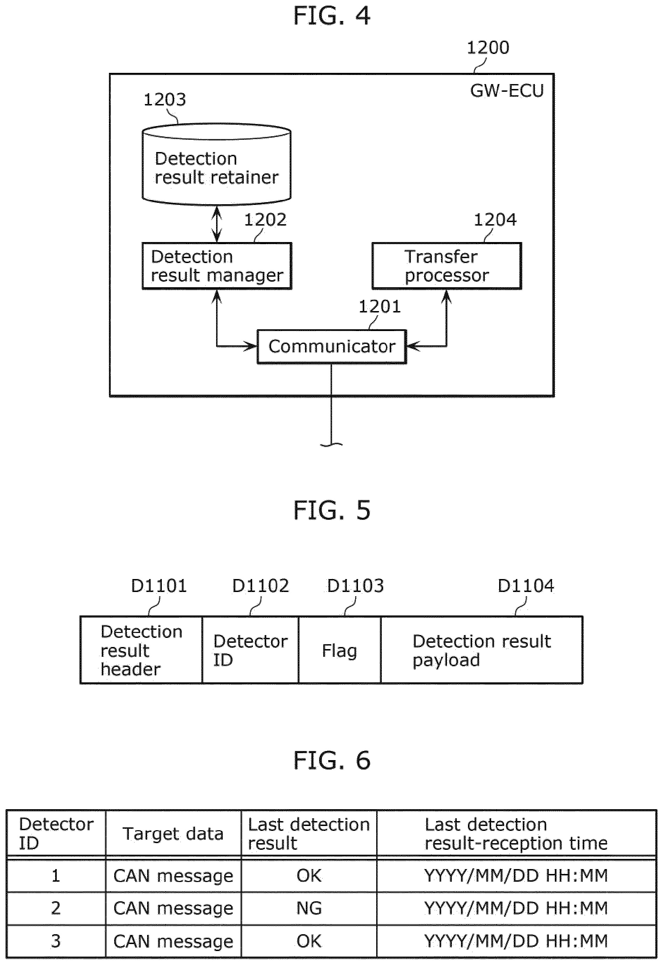

   FIG. 4 is a diagram illustrating one example of the configuration of the GW-ECU according to Embodiment 1.
[FIG. 5]
   FIG. 5 is a diagram illustrating one example of the format of the detection result state message according to Embodiment 1.
[FIG. 6]
   FIG. 6 is a diagram illustrating one example of the detection result management table according to Embodiment 1.
[FIG. 7]

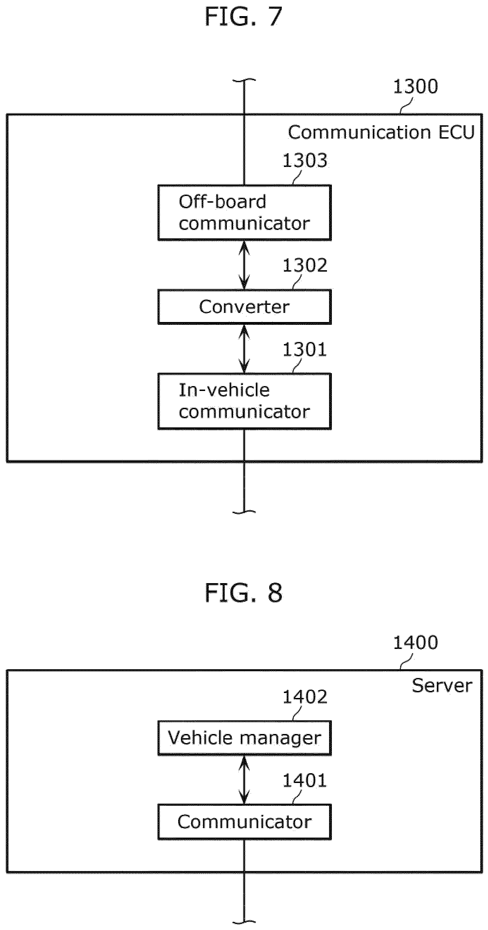

   FIG. 7 is a diagram illustrating one example of the configuration of the communication ECU according to Embodiment 1.
[FIG. 8]
   FIG. 8 is a diagram illustrating one example of the configuration of the server according to Embodiment 1.
[FIG. 9]

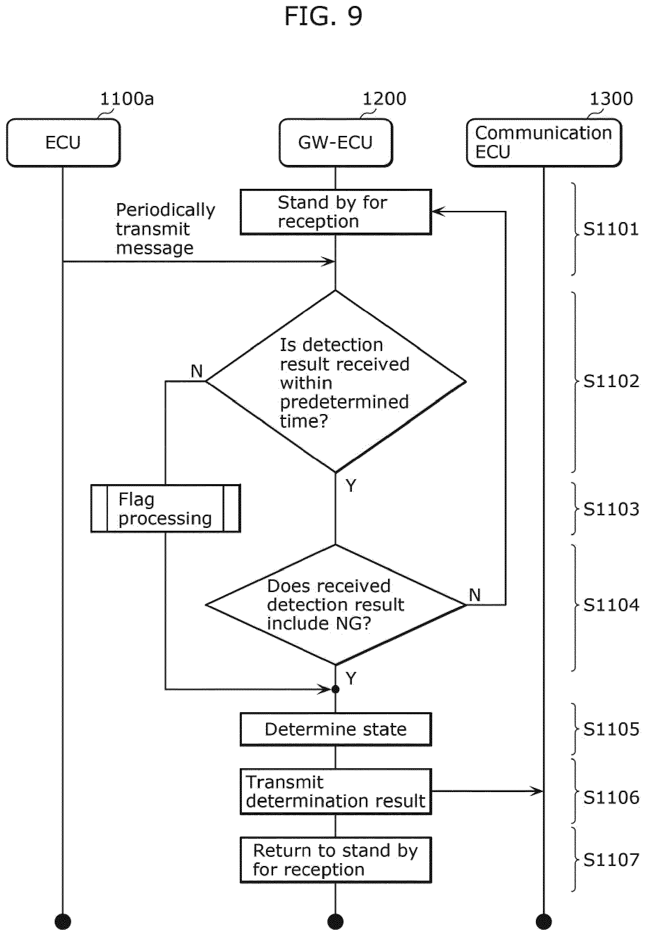

   FIG. 9 is a diagram illustrating one example of the sequence related with communication of the detection result according to Embodiment 1.
[FIG. 10]

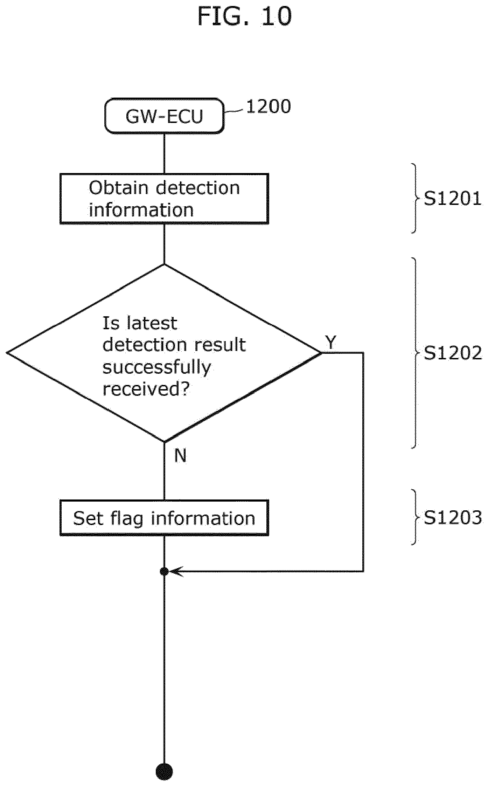

   FIG. 10 is a diagram illustrating one example of the sequence related with flag setting according to Embodiment 1.
[FIG. 11]

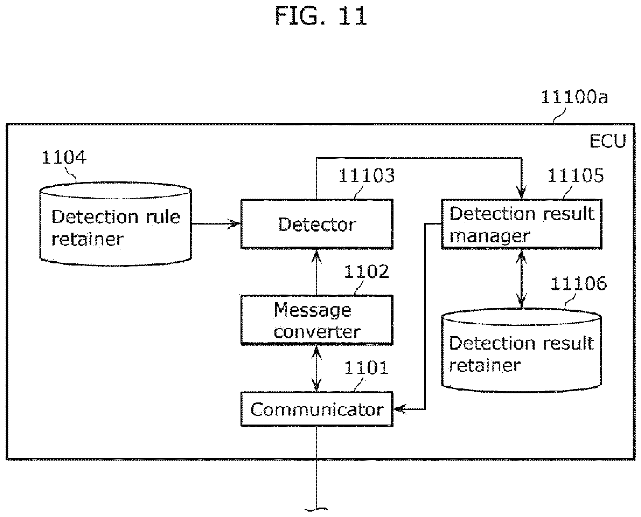

   FIG. 11 is a diagram illustrating one example of the configuration of the ECU according to a modification of Embodiment 1.
[FIG. 12]

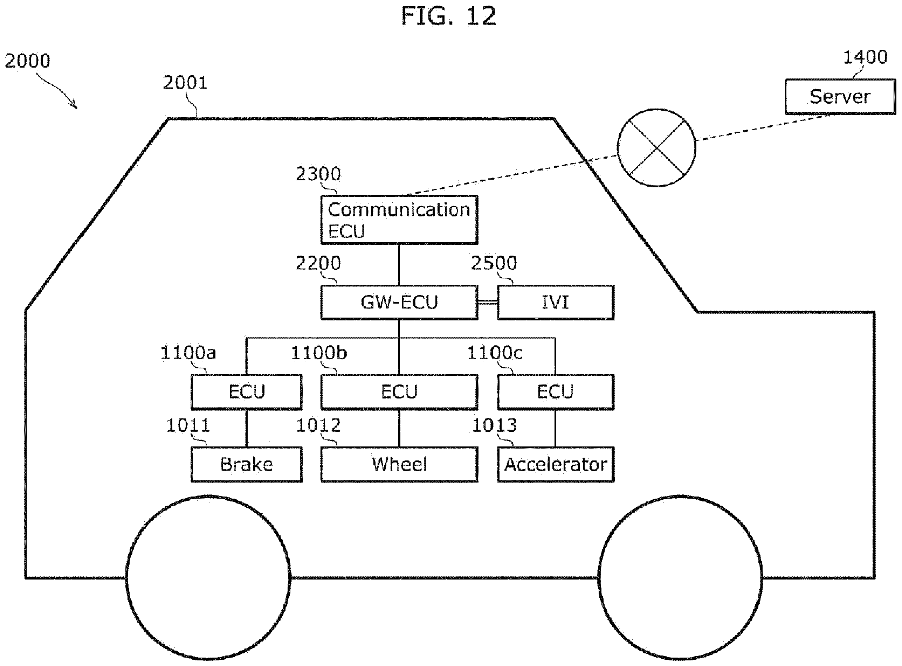

   FIG. 12 is a diagram illustrating one example of the overall configuration of the in-vehicle network system according to Embodiment 2.
[FIG. 13]

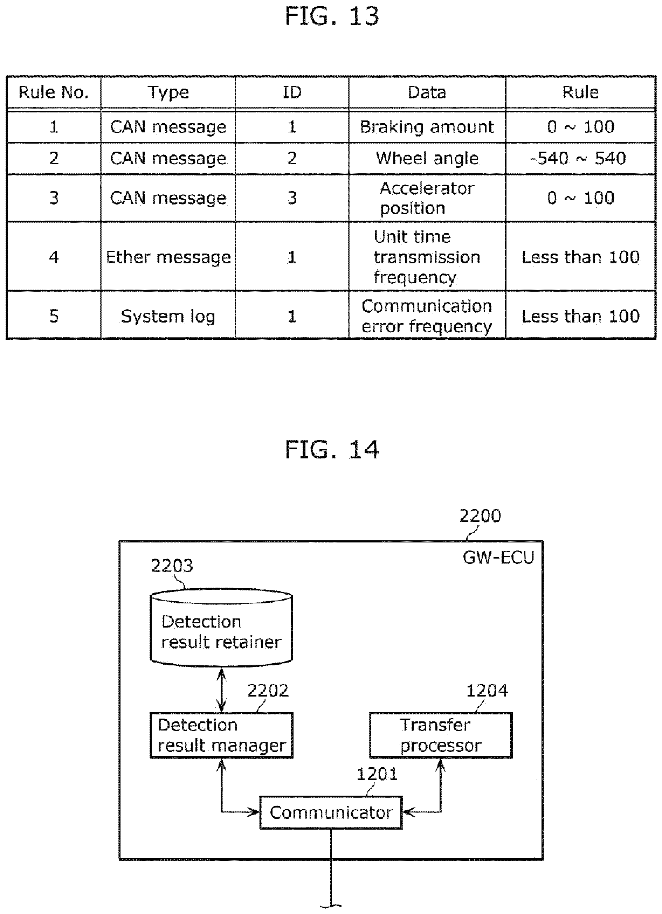

   FIG. 13 is a diagram illustrating one example of the detection rule according to Embodiment 2.
[FIG. 14]
   FIG. 14 is a diagram illustrating one example of the configuration of the GW-ECU according to Embodiment 2.
[FIG. 15]

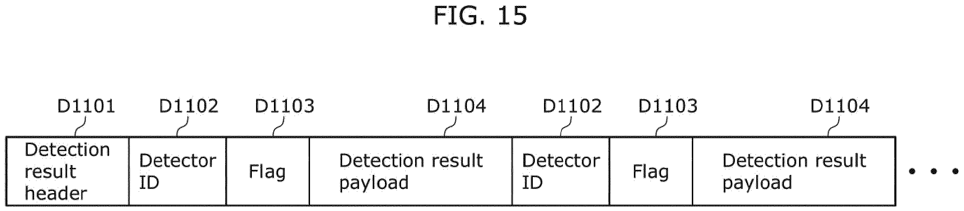

   FIG. 15 is a diagram illustrating one example of the format of the detection result state message according to Embodiment 2.
[FIG. 16]

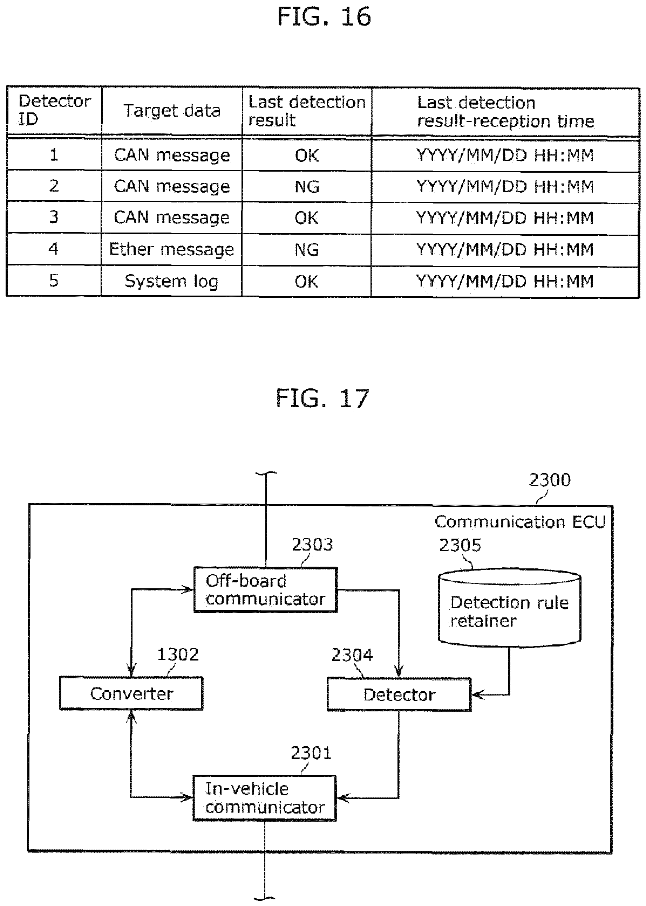

   FIG. 16 is a diagram illustrating one example of the detection result management table according to Embodiment 2.
[FIG. 17]
   FIG. 17 is a diagram illustrating one example of the configuration of the communication ECU according to Embodiment 2.
[FIG. 18]

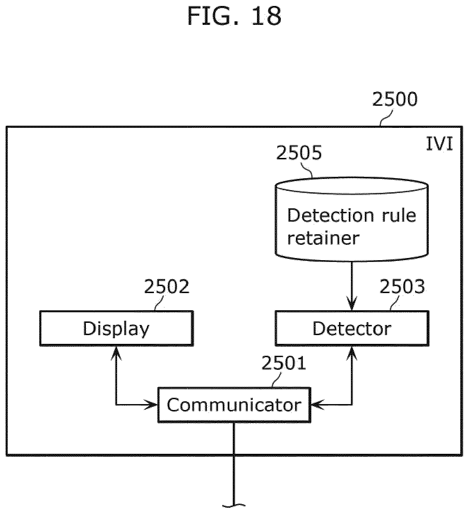

   FIG. 18 is a diagram illustrating one example of the configuration of the IVI according to Embodiment 2.
[FIG. 19]

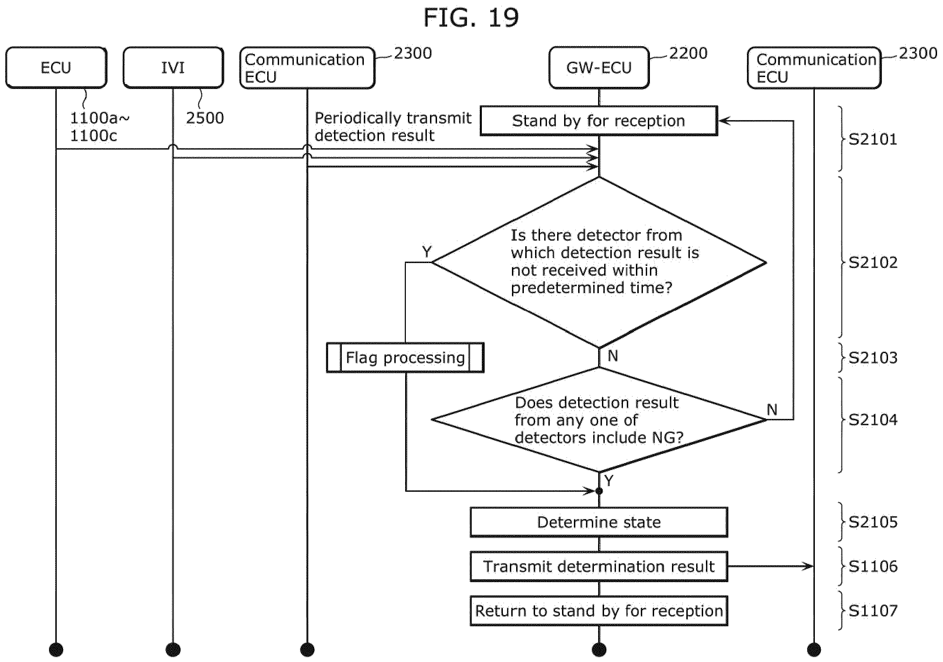

   FIG. 19 is a diagram illustrating one example of the sequence related with communication of the detection result according to Embodiment 2.
[FIG. 20]

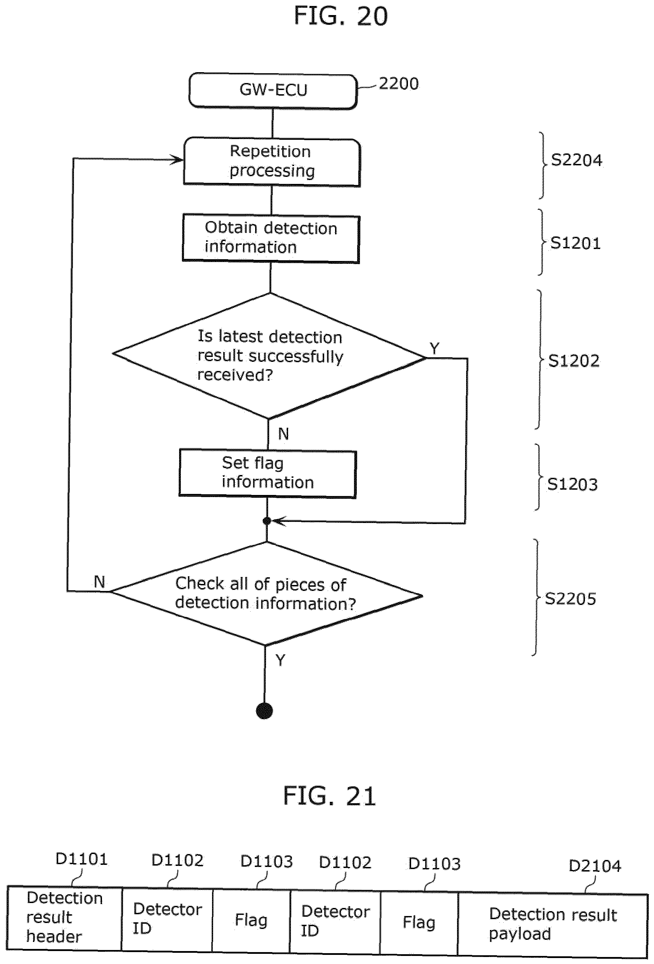

   FIG. 20 is a diagram illustrating one example of the sequence related with flag setting according to Embodiment 2.
[FIG. 21]
   FIG. 21 is a diagram illustrating one example of the format of the detection result state message according to Modification 1 of Embodiment 2.
[FIG. 22]

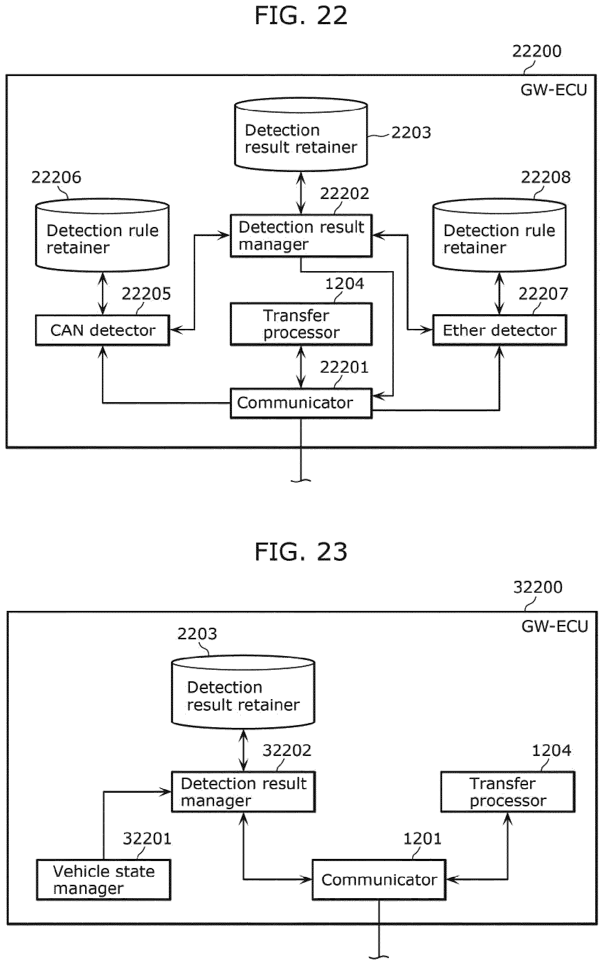

   FIG. 22 is a diagram illustrating one example of the configuration of the GW-ECU according to Modification 2 of Embodiment 2.
[FIG. 23]
   FIG. 23 is a diagram illustrating one example of the configuration of the GW-ECU according to Modification 3 of Embodiment 2.
[FIG. 24]

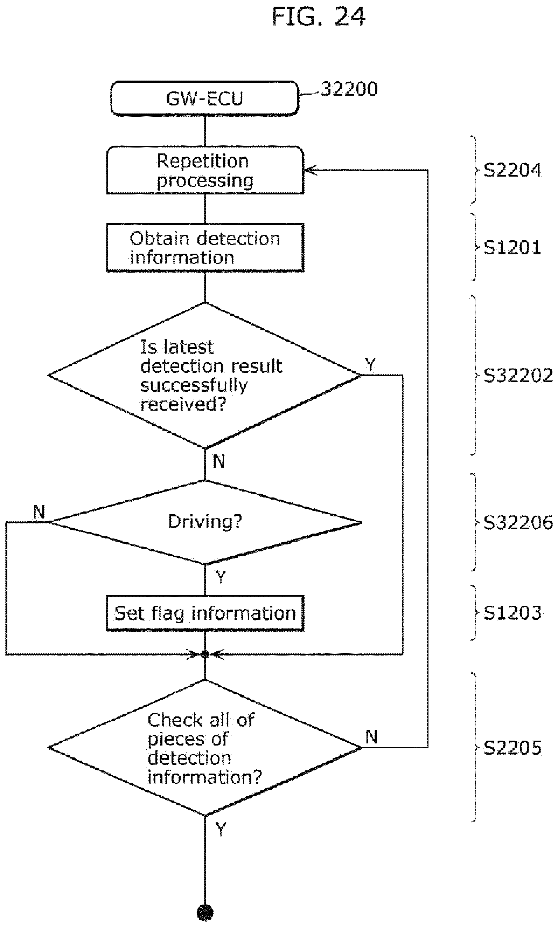

   FIG. 24 is a diagram illustrating one example of the sequence related with flag setting according to Modification 3 of Embodiment 2.

### [Description of Embodiments]

The anomaly detection method according to one aspect of the present disclosure is an anomaly detection method in an in-vehicle network system in which a plurality of electronic control units are connected. At least one electronic control unit among the plurality of electronic control units: includes a detector which determines whether a received message satisfies a predetermined rule, and transmits a detection result determined to a network. The anomaly detection method includes (i) receiving the detection result from the network, and storing the detection result received in a memory; (ii) determining whether the detection result is received within a predetermined time, and storing a determination result in the memory in association with the detection result; and (iii) outputting a message to an outside, the message including the detection result in association with the determination result.

The electronic control units connected to the in-vehicle network system each include a detector for detecting anomaly in the in-vehicle network system. In some cases, anomaly may occur in the detector itself because the detector is attacked. Although the detector transmits the determined detection result to the network, the detection result is not successfully received from the network within the predetermined time when anomaly occurs in the detector itself. In other words, when the detection result is not successfully received from the network within the predetermined time, anomaly may occur in the detector itself. Thus, in the present disclosure, the determination result indicating that the detection result is received within the predetermined time is associated with the detection result, and the message including the detection result associated with the determination result is output to the outside of the vehicle. Thereby, by analyzing the detection result associated with the determination result, a device outside the vehicle can appropriately distinguish whether anomaly occurs inside the in-vehicle network system or whether anomaly occurs in the detector itself which detects anomaly. Accordingly, the safety of the entire vehicle can be ensured, and a safer in-vehicle network system can be implemented.

Moreover, the (i) receiving may include periodically receiving the detection result from the network, and storing the detection result received in the memory each time, and the (ii) determining may include storing the determination result in the memory in association with a detection result received last time when the detection result is not received within the predetermined time.

Although the detector periodically transmits the determined detection result to the network, in some cases, the detection result is not successfully received from the network within the predetermined time when anomaly occurs in the detector itself. This, according to this aspect, when the detection result is not received within the predetermined time, the determination result is associated with the detection result received last time, and the message including the detection result received last time in association with the determination result is output to the outside of the vehicle. Thereby, by analyzing the detection result associated with the determination result, a device outside the vehicle can appropriately distinguish whether anomaly occurs inside the in-vehicle network system or whether anomaly occurs in the detector itself which detects anomaly.

Moreover, the (i) receiving may further include storing the detection result received, in association with a time when the detection result was received, and the (ii) determining may include determining whether the detection result received last time is a latest detection result, based on a time in association with the detection result received last time when the detection result is not received within the predetermined time, and storing the determination result in the memory in association with the detection result received last time when the detection result received last time is not the latest detection result.

For example, from the time when the detection result is received, it can be determined whether the detection result is the latest detection result. When the detection result is not received within the predetermined time and the detection result received last time is not the latest detection result, anomaly may occur in the detector itself. Thus, the determination result is associated with the detection result received last time. On the other hand, even when the detection result is not received within the predetermined time and the detection result received last time is the latest detection result, it is considered that such a case has no problem, and association of the determination result with the detection result received last time is avoided. When the detection result is not received even after the time further passed and the detection result received last time is no longer the latest detection result, the determination result is associated with the detection result received last time.

Moreover, the (ii) determining may include outputting the message including the detection result to the outside when the detection result is received within the predetermined time and the detection result indicates anomaly.

Thereby, even when the detection result is received within the predetermined time and the detection result indicates anomaly, the message including the detection result indicating anomaly can be output to the outside. Thereby, the device outside the vehicle can analyze the occurring anomaly.

Moreover, the at least one electronic control unit may include at least two electronic control units, and the (ii) determining may include: determining, for each of the at least two electronic control units, whether the detection result is received within the predetermined time; and when the detection result is not received within the predetermined time from an electronic unit among the at least two electronic units, storing the determination result in the memory in association with a detection result about the electronic control unit.

Thus, at least two electronic control units connected to the in-vehicle network system each may include the detector for detecting anomaly in the in-vehicle network system.

Moreover, the message output to the outside in the (iii) outputting may include detection results of the at least two electronic control units and determination results in association with the detection results of the at least two electronic control units.

Thereby, the detection results of the at least two electronic control units and the determination results associated with the detection results are collected in one message, thus enabling reduction in communication amount.

Moreover, the anomaly detection method may further include determining a state of a vehicle in the in-vehicle network system, and the (ii) determining may include determining whether to associate the determination result with the detection result according to the state of the vehicle.

In some cases, association of the determination result with the detection result is unnecessary depending on the state of the vehicle. Thus, as in this aspect, by determining whether to associate the determination result with the detection result depending on the state of the vehicle, appropriate information corresponding to the state of the vehicle can be output.

Moreover, the network may be an in-vehicle network through which the plurality of electronic control units transmit and receive messages.

Thus, the network through which the detection result of the detector is transmitted may be an in-vehicle network through which a plurality of electronic control units transmit and receive messages.

Moreover, the network may be a network inside the at least one electronic control unit.

Thus, the network through which the detection result of the detector is transmitted may be a network inside the electronic control unit.

Moreover, the detector may determine whether a controller area network (CAN) message, an Ethernet (registered trademark) message, or a system log of an electronic control unit as the received message satisfies the predetermined rule.

Thereby, anomaly in the CAN message, the Ethernet message, or the system log of the electronic control unit can be determined.

The program according to one aspect of the present disclosure is a program causing a computer to execute the anomaly detection method above.

Thereby, a program which can implement a safer in-vehicle network system can be provided.

The anomaly detection system according to one aspect of the present disclosure is an anomaly detection system in an in-vehicle network system in which a plurality of electronic control units are connected. At least one electronic control unit among the plurality of electronic control units: includes a detector which determines whether a received message satisfies a predetermined rule, and transmits a detection result determined to a network. The anomaly detection system includes a memory which stores the detection result received from the network; a detection result manager which determines whether the detection result is received within a predetermined time, and stores a determination result in the memory in association with the detection result; and a communicator which outputs a message to an outside, the message including the detection result in association with the determination result.

Thereby, an anomaly detection system which can implement a safer in-vehicle network system can be provided.

Hereinafter, a method of treating fraud according to embodiments of the present disclosure will be described with reference to the drawings. To be noted, the embodiments described below all represent preferred specific examples of the present disclosure. In other words, numeric values, shapes, materials, components, arrangements of components, connection forms thereof, steps, order of steps, and the like shown in the embodiments described below are one examples of the present disclosure, and should not be construed as limitations to the present disclosure. The present disclosure is specified based on the description in Claims. Accordingly, among the components of the following embodiments, the components not described in an independent claim representing the most superordinate concept of the present disclosure are not always necessary to achieve the object of the present disclosure, and are described as components which constitute more preferred embodiments.

### [Embodiment 1]

### [1. Configuration of system]

Here, as Embodiment 1 of the present disclosure, in-vehicle network system 1000 will be described with reference to the drawings.

### [1.1 Overall configuration of in-vehicle network system 1000]

FIG. 1 is a diagram illustrating one example of the overall configuration of in-vehicle network system 1000 according to Embodiment 1.

In-vehicle network system 1000 is configured of vehicle 1001 and server 1400 which is connected to vehicle 1001 through a network and operates. In in-vehicle network system 1000, a plurality of electronic control units (hereinafter, referred to as ECUs) which transmit and receive messages through a variety of in-vehicle networks are connected.

Vehicle 1001 is configured of ECUs 1100a, 1100b, and 1100c connected through a variety of in-vehicle networks, brake 1011, wheel 1012, and accelerator 1013 which are to be controlled by the ECUs, GW-ECU 1200 which relays connections of ECUs 1100a to 1100c, and communication ECU 1300 which communicates with GW-ECU 1200 through an in-vehicle network.

ECUs 1100a to 1100c implement control of the vehicle by mutually transmitting and receiving communication messages through the in-vehicle network. The in-vehicle network to be used is CAN, for example.

GW-ECU 1200 communicates with other ECUs through the in-vehicle network, and is responsible for transfer processing.

Communication ECU 1300 communicates with server 1400 to transmit and receive messages to and from server 1400 and other ECUs inside vehicle 1001.

Server 1400 remotely monitors to ensure the safety of vehicle 1001.

In-vehicle network system 1000 includes an anomaly detection system. The anomaly detection system is a system for implementing a safer in-vehicle network system, and includes a memory, a detection result manager, and a communicator. In Embodiment 1, the anomaly detection system is implemented by GW-ECU 1200. Concentration of such a function to implement a safer in-vehicle network system on a specific device (here, GW-ECU 1200) can reduce the load on the in-vehicle network. In contrast, another arrangement such that the function to implement a safer in-vehicle network system is distributed to a plurality of devices inside the vehicle may be used. In this case, loads of individual devices can be reduced, which can contribute to cost reduction as a whole.

Among a plurality of ECUs in in-vehicle network system 1000, at least one ECU includes a detector. In Embodiment 1, as the at least one ECU, ECU 1100a will be focused on and described.

### [1.2 Block diagram of ECU 1100a]

FIG. 2 is a diagram illustrating one example of the configuration of ECU 1100a according to Embodiment 1. ECU 1100a is configured of communicator 1101, message converter 1102, detector 1103, and detection rule retainer 1104. ECUs 1100b and 1100c have the same configuration as that of ECU 1100a, and thus the description thereof will be omitted here.

Communicator 1101 communicates with other ECUs through a variety of sensors or in-vehicle networks. Communicator 1101 notifies message converter 1102 of the received message or sensor value. Communicator 1101 transmits the message notified by message converter 1102 or detector 1103 to other ECUs or a variety of sensors.

Message converter 1102 converts the sensor values notified by the variety of sensors through communicator 1101, based on the format of the in-vehicle network, and transmits the converted sensor values to other ECUs through communicator 1101. Message converter 1102 also converts the communication message received from communicator 1101 to a sensor value or setting information, and transmits the sensor value or setting information to the variety of sensors through communicator 1101. Message converter 1102 also notifies detector 1103 of the received sensor value or message.

Detector 1103 determines whether the received message satisfies a predetermined rule. Specifically, detector 1103 determines the received message using the detection rule retained by detection rule retainer 1104. Detector 1103 transmits (specifically, periodically transmits) the determined detection result (in other words, the detection result indicating the result of determination by detector 1103) to the network. In Embodiment 1, the network is an in-vehicle network through which a plurality of ECUs transmit and receive messages.

Detection rule retainer 1104 retains the detection rule used by detector 1103. One example of the detection rule is shown in FIG. 3.

### [1.3 One example of detection rule]

FIG. 3 is a diagram illustrating one example of the detection rule according to Embodiment 1. The detection rule shown in FIG. 3 includes a rule for detecting anomaly of a message in the in-vehicle network. Specifically, the detection rule includes the rule number, the type of data to be determined, the ID of the data to be determined, the content of the data having the ID, and the determination rule (predetermined rule). For example, in the case where the data included in the received message is out of the range specified by the determination rule, the detection result is an error (NG), and in the case where the data included in the received message is within the range specified by the determination rule, the detection result is normal (OK). For example, detector 1103 of ECU 1100a determines whether the message obtained from brake 1011 satisfies the predetermined rule. In the case where the value indicated by the data (braking amount) with ID1 included in the message is out of the range of 0 to 100, detector 1103 determinates that the detection result is NG, and transmits the determination result to the in-vehicle network.

### [1.4 Block diagram of GW-ECU 1200]

FIG. 4 is a diagram illustrating one example of the configuration of GW-ECU 1200 according to Embodiment 1. As described above, GW-ECU 1200 is one example of the anomaly detection system according to Embodiment 1. GW-ECU 1200 is configured of communicator 1201, detection result manager 1202, detection result retainer 1203, and transfer processor 1204.

Communicator 1201 communicates with other ECUs through the in-vehicle network, and notifies detection result manager 1202 and transfer processor 1204 of the received messages. Communicator 1201 also transmits the messages, which are notified by detection result manager 1202 and transfer processor 1204, to other ECUs.

Detection result manager 1202 obtains the detection result from the received message about the detection result notified by communicator 1201, and stores the detection result in detection result retainer 1203 with related information. Detection result manager 1202 determines the detection result state of each ECU (e.g., ECU 1100a) from the content retained by detection result retainer 1203, and transmits a detection result state message to communication ECU 1300 through communicator 1201. One example of the message format of the detection result state message is shown in FIG. 5. Although details will be described later, detection result manager 1202 determines whether the detection result is received within a predetermined time, and stores the determination result in detection result retainer 1203 in association with the detection result. The message including the detection result in association with the result of determination is called a detection result state message.

Detection result retainer 1203 is one example of a memory which stores the detection result received from the network. Detection result retainer 1203 stores and retains the data of the detection result notified by detection result manager 1202. Detection result retainer 1203 also performs notification of the data of the detection result in response to a read-out instruction from detection result manager 1202. One example of the specific content retained will be shown in FIG. 6.

Transfer processor 1204 executes message transfer processing inside vehicle 1001 according to predetermined rules. In the present embodiment, the received message is transferred to all of other ECUs.

### [1.5 One example of format of detection result state message]

FIG. 5 is a diagram illustrating one example of the format of the detection result state message according to Embodiment 1. The payload is configured of detection result header D1101, detector ID D1102, flag D1103, and detection result payload D1104.

Detection result header D1101 is a region for storing the type of data thereafter and the value indicating the number thereof. A predetermined number included in the header indicates that the data thereafter is a message indicating the detection result state, and has a role in conveying its content to the receiver.

Detector ID D1102 stores the numbers for specifying detectors 1103 included in ECUs 1100a, 1100b, and 1100c. In other words, different detector IDs correspond to detectors 1103 in ECUs 1100a, 1100b, and 1100c, and the ECU including detector 1103 which has determined the received detection result can be specified using detector ID D1102.

Flag D1103 represents the determination result of whether the detection result from detector 1103 specified by detector ID D1102 can be normally received. In other words, flag D1103 is one example of the determination result indicating whether the detection result is received within a predetermined time. The determination of whether the detection result can be normally received can be determined according to whether the detection result is received within the predetermined time. When the determination result in flag D1103 indicates that the detection result is not received within the predetermined time, detector 1103 may be in a state where it does not periodically transmit the detection result, and anomaly may occur in detector 1103 itself.

Detection result payload D1104 is one example of the detection result determined by detector 1103. In the detection result state message stored in detection result retainer 1203, the determination result is associated with the detection result.

### [1.6 One example of detection result management table]

FIG. 6 is a diagram illustrating one example of the detection result management table according to Embodiment 1. The detection result management table is retained by detection result retainer 1203. The detection result management table is configured of the detector ID, target data, the last detection result, and the last detection result-reception time.

The detector ID is a number for specifying the detector mounted on each ECU. For example, the detector having a detector ID "1" can be specified as detector 1103 mounted on ECU 1100a, the detector having a detector ID "2" can be specified as detector 1103 mounted on ECU 1100b, and the detector having a detector ID "3" can be specified as detector 1103 mounted on ECU 1100c.

The target data indicates the data for detection when the detection result stored is detected. For example, for detectors 1103 of ECUs 1100a to 1100c, the detection result indicates the result from detection of a CAN message.

The last detection result indicates the detection result received last time among the detection results periodically received from detector 1103.

The last detection result-reception time is a time when the detection result received last time is received. The reception time is stored in detection result retainer 1203 in association with the detection result received.

### [1.7 Block diagram of communication ECU 1300]

FIG. 7 is a diagram illustrating one example of the configuration of communication ECU 1300 according to Embodiment 1. Communication ECU 1300 is configured of in-vehicle communicator 1301, converter 1302, and off-board communicator 1303.

In-vehicle communicator 1301 notifies converter 1302 of the messages received from other ECUs in vehicle 1001. In-vehicle communicator 1301 transmits the message notified by converter 1302 to other ECUs in vehicle 1001.

Converter 1302 converts the data which is included in the message received through in-vehicle communicator 1301 and needs to be transferred, to a predetermined format, and transmits the converted data to off-board communicator 1303. Converter 1302 converts the data which is included in the message received through off-board communicator 1303 and needs to be transferred, to a predetermined format, and transmits the converted data to in-vehicle communicator 1301.

Off-board communicator 1303 notifies converter 1302 of the message received from server 1400. Off-board communicator 1303 transmits the message notified by converter 1302 to server 1400

### [1.8 Block diagram of server 1400]

FIG. 8 is a block diagram of server 1400 according to Embodiment 1. Server 1400 is configured of communicator 1401 and vehicle manager 1402.

Communicator 1401 communicates with vehicle 1001, and notifies vehicle manager 1402 of the received message. Communicator 1401 also transmits the content notified by vehicle manager 1402 to vehicle 1001.

Vehicle manager 1402 communicates with vehicle 1001 through communicator 1401, and manages whether the detector for detecting anomaly inside vehicle 1001 is normally operating, based on the message which is received from vehicle 1001 and includes the detection result in association with the determination result.

### [1.9 One example of sequence of communication of detection result]

FIG. 9 is a diagram illustrating one example of the sequence related with communication of the detection result according to Embodiment 1. The sequence in FIG. 9 is also a sequence representing one example of the anomaly detection method according to Embodiment 1. In FIG. 9, one example of the sequence is illustrated in which ECU 1100a notifies GW-ECU 1200 of the detection result, and the determination result in GW-ECU 1200 is transmitted to communication ECU 1300.

(S1101) GW-ECU 1200 stands by for reception of the detection result from ECU 1100a for a predetermined time. ECU 1100a transmits the detection result (specifically, the message including the detection result) to the network. GW-ECU 1200 receives the detection result from the network, and stores the received detection result in a predetermined place (e.g., detection result retainer 1203). Specifically, ECU 1100a periodically transmits the detection result to the network. GW-ECU 1200 periodically receives the detection result from the network, and stores the received detection result in detection result retainer 1203 each time. Although ECUs 1100b and 1100c transmit the detection results as in ECU 1100a and GW-ECU 1200 receives the detection results from ECUs 1100b and 1100c, ECU 1100a will also be focused on and described here.

(S1102) GW-ECU 1200 determines whether GW-ECU 1200 has received the detection result within a predetermined time (e.g., within a predetermined time since GW-ECU 1200 received the detection result last time). The processing goes to S1103 when GW-ECU 1200 has not successfully received the detection result within the predetermined time, and goes to S1104 when GW-ECU 1200 has received the detection result within the predetermined time. Although not particularly limited, the predetermined time is determined according to the interval of reception of the detection result periodically received from normal ECU 1100a, for example.

(S1103) GW-ECU 1200 performs processing for flagging the message. Details of the processing will be described with reference to FIG. 10.

(S1104) When GW-ECU 1200 has received the detection result within the predetermined time, GW-ECU 1200 determines whether a result indicating NG is included in the received detection result. The processing goes to S1101 when such a result is not included, and goes to S1105 when such a result is included.

(S1105) GW-ECU 1200 determines the state of ECU 1100a which has transmitted the detection result, according to a predetermined algorithm. In the present embodiment, when GW-ECU 1200 has received the result indicating NG even once, GW-ECU 1200 determines that ECU 1100a is attacked. When GW-ECU 1200 determines that GW-ECU 1200 has received a result indicating OK, GW-ECU 1200 determines that the ECU is normal.

(S1106) GW-ECU 1200 transmits the determination result in S1105 to communication ECU 1300. For example, when GW-ECU 1200 has received the detection result within the predetermined time and the detection result indicates anomaly, GW-ECU 1200 outputs a message including the detection result to the outside (server 1400). GW-ECU 1200 also outputs the detection result in association with the determination result, which indicates whether GW-ECU 1200 has received the detection result within the predetermined time, to the outside through communication ECU 1300.

(S1107) GW-ECU 1200 completes a series of processings, and returns to S1101.

### [1.10 One example of flag processing sequence]

FIG. 10 is a diagram illustrating one example of the sequence related with flag setting according to Embodiment 1. FIG. 10 shows one example of the sequence of the processing of flagging when GW-ECU 1200 has not successfully received the detection result from ECU 1100a within the predetermined time.

(S1201) GW-ECU 1200 obtains information of the detection result received last time. Specifically, when GW-ECU 1200 has not successfully received the detection result within the predetermined time, GW-ECU 1200 obtains the time when the detection result received last time was received.

(S1202) GW-ECU 1200 determines whether the latest detection result is successfully received. Specifically, when GW-ECU 1200 has not successfully received the detection result within the predetermined time, GW-ECU 1200 determines whether the detection result received last time is the latest detection result, based on the time in association with the detection result received last time. When the detection result received last time is not the latest detection result, namely, when the last detection result is old information, the processing goes to S1203.

(S1203) GW-ECU 1200 sets a flag area in a message for notification of the state of ECU 1100a (detection result state message illustrated in FIG. 5). Specifically, GW-ECU 1200 stores a determination result in detection result retainer 1203 in association with the detection result received last time, the determination result indicating that the detection result is not received within the predetermined time. In other words, a determination result indicating that anomaly may occur in detector 1103 itself in ECU 1100a is stored in association with the detection result received last time. The message including the detection result is then output to the outside of vehicle 1001, and is analyzed.

### (Effects of Embodiment 1)

In-vehicle network system 1000 illustrated in Embodiment 1 can cause a device outside vehicle 1001 (e.g., server 1400) to appropriately distinguish whether anomaly occurs inside in-vehicle network system 1000 or whether anomaly occurs in detector 1103 itself which detects the occurring anomaly, and thus can ensure the safety of the entire vehicle 1001.

### (Modification of Embodiment 1)

In in-vehicle network system 1000 illustrated in Embodiment 1, an example has been described in which GW-ECU 1200 separate from ECU 1100a including detector 1103 includes detection result manager 1202. Alternatively, the ECU including the detector may include the detection result manager. Description of the same drawings as those in Embodiment 1 will be omitted, and only ECU 11100a having a different configuration from that of ECU 1100a will be described.

In a modification of Embodiment 1, ECU 11100a will be focused on and described as at least one ECU including the detector. In the modification of Embodiment 1, the anomaly detection system is implemented by ECU 11100a.

### [1.11 block diagram of ECU 11100a]

FIG. 11 is a diagram illustrating one example of the configuration of ECU 11100a according to a modification of Embodiment 1. ECU 11100a is configured of communicator 1101, message converter 1102, detector 11103, detection rule retainer 1104, detection result manager 11105, and detection result retainer 11106. ECUs 11100b and 11100c (not illustrated) corresponding to ECUs 1100b and 1100c according to Embodiment 1 also have the same configuration as that of ECU 11100a, and the description thereof will be omitted here.

Detector 11103 determines whether the received message satisfies a predetermined rule. Specifically, detector 11103 determines the received message using the detection rule retained by detection rule retainer 1104. Detector 11103 transmits (specifically, periodically transmits) the determined detection result to the network, and notifies detection result manager 11105 thereof. In the modification of Embodiment 1, the network is a network inside ECU 11100a, and specifically is a bus which connects detector 11103 and detection result manager 11105 inside ECU 11100a.

Detection result manager 11105 stores the detection result notified by detector 11103 in detection result retainer 11106 together with related information. Detection result manager 11105 also determines the detection result state of detector 11103 from the content retained by detection result retainer 11106, and transmits a detection result state message to communication ECU 1300 through communicator 1101. The message format of the detection result state message as one example is the same as that shown in FIG. 5, and the description thereof will be omitted. Other functions of detection result manager 11105 are the same as those of detection result manager 1202 according to Embodiment 1, and the description thereof will be omitted.

Detection result retainer 11106 stores the data of the detection result notified by detection result manager 11105, and stores the data. Detection result retainer 11106 also sends a notification of the data of the detection result in response to a read-out instruction from detection result manager 11105. A specific retained content as one example is the same as that shown in FIG. 6, and the description thereof will be omitted.

### (Effects of modification of Embodiment 1)

In the in-vehicle network system illustrated in the modification of Embodiment 1, ECUs 11100a to 11100c each include detection result manager 11105, and determine whether anomaly occurs in its corresponding detector 11103 itself. For this reason, even when anomaly simultaneously occurs in several places of the in-vehicle network (specifically, two or more of ECUs 11100a to 11100c), the in-vehicle network system according to the modification of Embodiment 1 can cause an external device to appropriately distinguish whether anomaly occurs inside the in-vehicle network system or whether anomaly occurs in detector 11103 which detects the occurring anomaly, and thus can ensure the safety of the entire vehicle. Moreover, because the determination is performed inside the ECU, i.e., in a place inside the vehicle close to the actual place where anomaly occurs, the measures against it can be quickly taken. Moreover, because each ECU includes detector 11103 and detection result manager 11105, the load on the network inside the vehicle can be reduced.

### [Embodiment 2]

In-vehicle network system 1000 illustrated in Embodiment 1 has been described as an example in which one detection result state message contains only one detection result of detector 1103 included in a specific ECU as illustrated in FIG. 5. In Embodiment 2, an example in which one detection result state message contains the detection results of a plurality of detectors will be described with reference to the drawings. The description of the same drawings as those in Embodiment 1 will be omitted.

### [2. Configuration of system]

Here, as Embodiment 2 according to the present disclosure, in-vehicle network system 2000 will be described with reference to the drawings. For the same configurations as those in Embodiment 1, identical reference signs will be given and the description of the configurations will be omitted.

### [2.1 Overall configuration of in-vehicle network system 2000]

FIG. 12 is a diagram illustrating one example of the overall configuration of in-vehicle network system 2000 illustrated in Embodiment 2. In in-vehicle network system 2000, a plurality of ECUs which transmit and receive messages through a variety of in-vehicle networks are connected.

In-vehicle network system 2000 is configured of vehicle 2001 and server 1400 which is connected to vehicle 2001 through a network and operates.

Vehicle 2001 is configured of ECUs 1100a, 1100b, and 1100c connected through a variety of in-vehicle networks, brake 1011, wheel 1012, and accelerator 1013, which are controlled by the ECUs, GW-ECU 2200 which relays connection of ECUs 1100a to 1100c, communication ECU 2300 which communicates with GW-ECU 2200 through the in-vehicle networks, and in-vehicle infotainment system (IVI) 2500 including a screen which can present information to a driver.

GW-ECU 2200 communicates with other ECUs through the in-vehicle networks, and is responsible for transfer processing.

Communication ECU 2300 communicates with server 1400 to transmit and receive messages to and from server 1400 and other ECUs inside vehicle 2001.

IVI 2500 is an ECU which communicates with other ECUs through GW-ECU 2200 and presents information inside vehicle 2001 to the driver. IVI 2500 is connected to GW-ECU 2200 through the Ethernet, for example.

In-vehicle network system 2000 includes an anomaly detection system. The anomaly detection system is a system for implementing a safer in-vehicle network system, and includes a memory, a detection result manager, and a communicator. In Embodiment 2, the anomaly detection system is implemented by GW-ECU 2200.

Among a plurality of ECUs in in-vehicle network system 2000, at least two ECUs include detectors. In Embodiment 2, ECUs 1100a to 1100c as the at least two ECUs, communication ECU 2300, and IVI 2500 will be described.

### [2.2 One example of detection rule]

FIG. 13 is a diagram illustrating one example of the detection rule according to Embodiment 2. The detection rule shown in FIG. 13 includes a rule for detecting anomaly of a message in the in-vehicle network. Specifically, the detection rule includes the rule number, the type of data to be determined, the ID of the data to be determined, the content of the data having the ID, and the determination rule (predetermined rule). For example, in the case where the data included in the received message or a log is out of the range specified by the determination rule, the detection result is an error (NG), and in the case where the data included in the received message or the log determination rule is within the range specified by the determination rule, the detection result is normal (OK).

For example, detector 1103 of ECU 1100a determines whether the message obtained from brake 1011 satisfies the predetermined rule. When the value indicated by the data (braking amount) with ID1 included in the message is out of the range of 0 to 100, detector 1103 in ECU 1100a determines that the detection result is NG, and transmits the determination result to the in-vehicle network.

For example, detector 1103 in ECU 1100b determines whether the message obtained from wheel 1012 satisfies a predetermined rule. When the value indicated by the data (wheel angle) with ID2 included in the message is out of the range of -540 to 540, detector 1103 in ECU 1100b determines that the detection result is NG, and transmits the determination result to the in-vehicle network.

For example, detector 1103 in ECU 1100c determines whether the message obtained from accelerator 1013 satisfies a predetermined rule. When the value indicated by the data (accelerator position) with ID3 included in the message is out of the range of 0 to 100, detector 1103 in ECU 1100c determines that the detection result is NG, and transmits the determination result to the in-vehicle network.

For example, detector 2503 (see FIG. 18 described later) in IVI 2500 determines whether the Ether message satisfies a predetermined rule. When the value indicated by the data (unit time transmission frequency) with ID1 included in the message is 100 or more, detector 2503 determines that the detection result is NG, and transmits the determination result to the in-vehicle network.

For example, detector 2304 (see FIG. 17 described later) in communication ECU 2300 determines whether the system log satisfies a predetermined rule. When the value indicated by the data (communication error frequency) with ID1 included in the system log is 100 or more, detector 2304 determines that the detection result is NG, and transmits the determination result to the in-vehicle network.

### [2.3 Block diagram of GW-ECU 2200]

FIG. 14 is a diagram illustrating one example of the configuration of GW-ECU 2200 according to Embodiment 2. As described above, in Embodiment 2, GW-ECU 2200 is one example of the anomaly detection system. GW-ECU 2200 is configured of communicator 1201, detection result manager 2202, detection result retainer 2203, and transfer processor 1204.

Detection result manager 2202 obtains a detection result from a received message about the detection result notified by communicator 1201, and stores the detection result with related information in detection result retainer 2203. Detection result manager 2202 also determines the detection result states of the ECUs (e.g., ECUs 1100a to 1100c, communication ECU 2300, and IVI 2500) from the content retained by detection result retainer 2203, and transmits a detection result state message to communication ECU 2300 through communicator 1201. One example of the message format of the detection result state message is shown in FIG. 15. Although details will be described later, for each of ECUs 1100a to 1100c, communication ECU 2300, and IVI 2500, detection result manager 2202 determines whether the detection result is received within a predetermined time. When among ECUs 1100a to 1100c, communication ECU 2300, and IVI 2500, there is an ECU from which the detection result is not received within the predetermined time, detection result manager 2202 stores the determination result in detection result retainer 2203 in association with the detection result about the ECU.

Detection result retainer 2203 is one example of the memory which stores the detection result received from the network. Detection result retainer 2203 stores and retains the data of the detection result notified by detection result manager 2202. Detection result retainer 2203 also sends a notification of the data of the detection result in response to a read-out instruction from detection result manager 2202. One example of a specific retained content will be shown in FIG. 16.

### [2.4 One example of format of detection result state message]

FIG. 15 is a diagram illustrating one example of the format of the detection result state message according to Embodiment 2. The payload is configured of detection result header D1101, detector ID D1102, flag D1103, and detection result payload D1104. Although the configuration is the same as that in Embodiment 1 and the description thereof will be omitted, flags for a plurality of detectors can be included in one message as shown in this diagram. In other words, in Embodiment 2, the detection result state message includes the detection results of ECUs 1100a to 1100c, communication ECU 2300, and IVI 2500 and flags (determination results) in association with the detection results of ECUs 1100a to 1100c, communication ECU 2300, and IVI 2500.

### [2.5 One example of detection result management table]

FIG. 16 is a diagram illustrating one example of the detection result management table according to Embodiment 2. The detection result management table is retained by detection result retainer 2203. The detection result management table is configured of the detector ID, the target data, the last detection result, and the last detection result-reception time. The description of the same configuration as that in Embodiment 1 will be omitted.

For example, the detector having an detector ID "4" can be specified as detector 2503 mounted on IVI 2500, and the detector having an detector ID "5" can be specified as detector 2304 mounted on communication ECU 2300.

For example, the detection result in detector 2503 in IVI 2500 indicates the result from detection of the Ether message, and the detection result in detector 2304 in communication ECU 2300 indicates the result from detection of the system log.

### [2.6 Block diagram of communication ECU 2300]

FIG. 17 is a diagram illustrating one example of the configuration of communication ECU 2300 according to Embodiment 2. Communication ECU 2300 is configured of in-vehicle communicator 2301, converter 1302, off-board communicator 2303, detector 2304, and detection rule retainer 2305.

In-vehicle communicator 2301 notifies converter 1302 of the messages received from other ECUs inside vehicle 2001. In-vehicle communicator 2301 transmits the messages notified by converter 1302 and detector 2304 to other ECUs inside vehicle 2001.

Off-board communicator 2303 notifies converter 1302 of the message received from server 1400. Off-board communicator 2303 also transmits the message notified by converter 1302 to server 1400. Furthermore, off-board communicator 2303 notifies detector 2304 of the system log related with communication.

Detector 2304 determines whether the received message (specifically, system log related with communication) satisfies a predetermined rule. Specifically, using the detection rule retained by detection rule retainer 2305, detector 2304 examines the system log related with communication, which is notified by off-board communicator 2303, periodically transmits whether a communication error occurs to the network through in-vehicle communicator 2301, and sends a notification to GW-ECU 2200. In Embodiment 2, the network is an in-vehicle network through which a plurality of ECUs transmit and receive messages.

Detection rule retainer 2305 retains the detection rule used by detector 2304. Because one example of the detection rule has already been described in FIG. 13, the description thereof will be omitted here.

### [2.7 Block diagram of IVI 2500]

FIG. 18 is a diagram illustrating one example of the configuration of IVI 2500 according to Embodiment 2. IVI 2500 is configured of communicator 2501, display 2502, detector 2503, and detection rule retainer 2505.

Communicator 2501 communicates with other ECUs through the in-vehicle network. Communicator 2501 notifies display 2502 and detector 2503 of the received message. Communicator 2501 also transmits the message notified by detector 2503 to GW-ECU 2200.

Display 2502 displays the content received through communicator 2501. Display 2502 also notifies other ECUs of the content of operation by the driver through communicator 2501.

Detector 2503 determines whether the received message satisfies a predetermined rule. Specifically, detector 2503 detects anomaly in in-vehicle communication according to the detection rule retained by detection rule retainer 2505, periodically transmits the detection result to the network through communicator 2501, and sends a notification to GW-ECU 2200. In Embodiment 2, the network is an in-vehicle network through which a plurality of ECUs transmit and receive messages.

Detection rule retainer 2505 retains the detection rule used by detector 2503. One example of the detection rule has already been described in FIG. 13, and the description thereof will be omitted.

### [2.8 One example of communication of detection result sequence]

FIG. 19 is a diagram illustrating one example of the sequence related with communication of the detection result according to Embodiment 2. FIG. 19 is also a sequence representing one example of the anomaly detection method according to Embodiment 2. FIG. 19 shows one example of the sequence in which ECUs 1100a to 1100c, communication ECU 2300, and IVI 2500 notify GW-ECU 2200 of the detection results, determination is performed in GW-ECU 2200, and the result is transmitted to communication ECU 2300. For the same processing steps as those in Embodiment 1, identical reference signs will be given, and the description thereof will be omitted.

(S2101) GW-ECU 2200 stands by for reception of the detection results from ECUs 1100a to 1100c, communication ECU 2300, and IVI 2500 for a predetermined time. ECUs 1100a to 1100c, communication ECU 2300, and IVI 2500 periodically transmit the detection results to the network. GW-ECU 2200 periodically receives the detection results from the network, and stores the received detection results in a predetermined place (e.g., detection result retainer 2203) each time.

(S2102) For each of ECUs 1100a to 1100c, communication ECU 2300, and IVI 2500, GW-ECU 2200 determines whether GW-ECU 2200 has received the detection result within a predetermined time (e.g., within a predetermined time since GW-ECU 2200 received the detection result last time). In other words, GW-ECU 2200 determines whether there is a detector from which GW-ECU 2200 has not successfully received the detection result within the predetermined time. When there is a detector (the ECU including the detector) from which GW-ECU 2200 has not successfully received the detection result within the predetermined time, the processing goes to S2103, and when GW-ECU 2200 has received the detection results from all the ECUs within the predetermined time, the processing goes to S2104. Although not particularly limited, the predetermined time is determined according to the reception interval of the detection results periodically received from normal ECUs 1100a to 1100c, communication ECU 2300, and IVI 2500, for example. Alternatively, the predetermined time may be determined for each of the ECUs, and may be different among the ECUs.

(S2103) GW-ECU 2200 executes processing for flagging messages. Details of the processing will be described with reference to FIG. 20.

(S2104) When GW-ECU 2200 has received the detection results from all the ECUs within the predetermined time, GW-ECU 2200 determines whether a result indicating NG is included in the received detection results. The processing goes to S2101 when the result indicating NG is not included, and goes to S2105 when the result indicating NG is included.

(S2105) GW-ECU 2200 determines the states of all the ECUs which have transmitted the detection results, according to a predetermined algorithm. In the present embodiment, when GW-ECU 2200 has received the result indicating NG even once, GW-ECU 2200 determines that the corresponding ECU is attacked. When GW-ECU 2200 has received a result indicating OK, GW-ECU 2200 determines that the corresponding ECU is normal.

### [2.9 One example of flag processing sequence]

FIG. 20 is a diagram illustrating one example of the sequence related with flag setting according to Embodiment 2. FIG. 20 shows one example of the sequence of the processing of flagging when there is an ECU from which GW-ECU 2200 does not successfully receive the detection result within the predetermined time. For the same processing steps as those in Embodiment 1, identical reference signs will be given, and the description thereof will be omitted.

(S2204) GW-ECU 2200 starts repetition processing of S1201 to S1203 by the number of times corresponding to the ECUs to be detected. Specifically, among ECUs 1100a to 1100c, communication ECU 2300, and IVI 2500, there is an ECU from which GW-ECU 2200 does not successfully receive the detection result within the predetermined time, GW-ECU 2200 stores the determination result in detection result retainer 2203 in association with the detection result about the ECU. More specifically, when among ECUs 1100a to 1100c, communication ECU 2300 and IVI 2500, there is an ECU from which GW-ECU 2200 does not successfully receive the detection result within the predetermined time and the detection result about the ECU received last time is not the latest detection result, GW-ECU 2200 stores the determination result in detection result retainer 2203 in association with the detection result about the ECU.

(S2205) After GW-ECU 2200 executes the repetition processing by the number of times corresponding to the ECUs to be detected, GW-ECU 2200 terminates the processing.

### (Effects of Embodiment 2)

In-vehicle network system 2000 illustrated in Embodiment 2 can cause a device outside vehicle 2001 to appropriately distinguish whether anomaly occurs inside in-vehicle network system 2000 or whether anomaly occurs in the detector itself which detects the occurring anomaly, and thus can ensure the safety of the entire vehicle 2001. Moreover, because a plurality of detection results is collected in one message as shown in FIG. 15, it is unnecessary to distribute the detection results to a plurality of messages and transmit these to the outside of vehicle 2001, thus enabling reduction in communication amount.

### (Modification 1 of Embodiment 2)

In in-vehicle network system 2000 illustrated in Embodiment 2, an example in which a detection result (detection result payload D1104) is created for each ECU including the detector as shown in FIG. 15 has been described. Alternatively, a comprehensive detection result as the vehicle may be determined. Because the description of the drawings identical to those in Embodiment 2 will be omitted, only the format of the detection result state message will be described.

### [2.10 One example of format of detection result state message]

FIG. 21 is a diagram illustrating one example of the format of the detection result state message according to Modification 1 of Embodiment 2. The payload is configured of detection result header D1101, detector ID D1102, flag D1103, and detection result payload D2104. A result obtained from comprehensive determination of all the detection results is stored in detection result payload D2104 at the end. For example, a comprehensive determination result may be stored, where the case where all the detection rules specified in FIG. 13 are satisfied is determined as OK and the case where even one of them is not satisfied is determined as NG.

### (Effects of Modification 1 of Embodiment 2)

The in-vehicle network system illustrated in Modification 1 of Embodiment 2 can cause a device outside the vehicle to appropriately distinguish whether anomaly occurs inside the in-vehicle network system or whether anomaly occurs in the detector itself which detects the occurring anomaly, and thus can ensure the safety of the entire vehicle. Moreover, because a plurality of detection results is collected in one message and transmitted as shown in FIG. 21, it is unnecessary to distribute the detection results to a plurality of messages and transmit these to the outside of the vehicle, thus enabling reduction in communication amount. Furthermore, the communication amount can be further reduced by collecting the detection results of the individual detectors in one determination resu It.

### (Modification 2 of Embodiment 2)

Although the ECUs include detectors in in-vehicle network system 2000 illustrated in Embodiment 2 in the above description, the GW-ECU may be configured to have a function corresponding to the detector included in each ECU. The description of the drawings identical to those in Embodiment 2 will be omitted, and GW-ECU 22200 having a configuration different from that of GW-ECU 2200 will be described here.

### [2.11 Block diagram of GW-ECU 22200]

FIG. 22 is a diagram illustrating one example of the configuration of GW-ECU 22200 according to Modification 2 of Embodiment 2. In Modification 2 of Embodiment 2, GW-ECU 22200 is also one example of the anomaly detection system. GW-ECU 22200 is configured of communicator 22201, detection result manager 22202, detection result retainer 2203, transfer processor 1204, CAN detector 22205, detection rule retainer 22206, Ether detector 22207, and detection rule retainer 22208.

Communicator 22201 communicates with other ECUs through the in-vehicle network, and notifies CAN detector 22205, Ether detector 22207, and transfer processor 1204 of the received messages. Communicator 22201 also transmits the messages notified by detection result manager 22202 and transfer processor 1204 to other ECUs.

Detection result manager 22202 stores the detection results notified by CAN detector 22205 and Ether detector 22207 in detection result retainer 2203 together with related information. Detection result manager 22202 determines the detection result states of the ECUs from the content retained by detection result retainer 2203, and transmits a detection result state message to communication ECU 2300 through communicator 22201. The message format of the detection result state message as one example is the same as that shown in FIG. 15, and the description thereof will be omitted. Other functions of detection result manager 22202 are the same as those of detection result manager 2202 according to Embodiment 2, and the description thereof will be omitted.

CAN detector 22205 is one example of the detector which determines whether the received message satisfies a predetermined rule, and is a detector corresponding to detector 1103 included in each of ECUs 1100a to 1100c according to Embodiment 2. Using the detection rule retained by detection rule retainer 22206, CAN detector 22205 determines the received CAN message. CAN detector 22205 transmits (specifically, periodically transmits) the determined detection result to the network, and sends a notification to detection result manager 22202. In Modification 2 of Embodiment 2, the network is a network inside GW-ECU 22200, and is specifically a bus which connects CAN detector 22205 and detection result manager 22202 inside GW-ECU 22200.

Detection rule retainer 22206 retains the detection rule used by CAN detector 22205. Because one example of the detection rule has already been described in FIG. 13, the description thereof will be omitted here.

Ether detector 22207 is one example of the detector which determines that the received message satisfies a predetermined rule, and is a detector corresponding to detector 2503 included in IVI 2500 according to Embodiment 2. Using the detection rule retained by detection rule retainer 22208, Ether detector 22207 determines the received Ether message. Ether detector 22207 transmits (specifically, periodically transmits) the determined detection result to the network, and sends a notification to detection result manager 22202. In Modification 2 of Embodiment 2, the network is a network inside GW-ECU 22200, and is specifically a bus which connects Ether detector 22207 and detection result manager 22202 inside GW-ECU 22200.

Detection rule retainer 22208 retains the detection rule used by Ether detector 22207. Because one example of the detection rule has already been described in FIG. 13, the description thereof will be omitted.

### (Effects of Modification 2 of Embodiment 2)

The in-vehicle network system illustrated in Modification 2 of Embodiment 2 can cause a device outside the vehicle to appropriately distinguish whether anomaly occurs inside the in-vehicle network system or whether anomaly occurs in the detector itself which detects the occurring anomaly, and thus can ensure the safety of the entire vehicle. Moreover, the configuration in which one GW-ECU 22200 includes a detector and detection result manager 22202 can reduce the load on the network inside the vehicle.

### (Modification 3 of Embodiment 2)

In in-vehicle network system 2000 illustrated in Embodiment 2, an example in which the processing is performed irrespective of the state of vehicle 2001 has been described. Alternatively, the detection result manager may change the processing depending on the state of the vehicle. The description of the drawings identical to those in Embodiment 2 will be omitted, and GW-ECU 32200 having a configuration different from that of GW-ECU 2200 and the flag processing sequence will be described here.

### [2.12 Block diagram of GW-ECU 32200]

FIG. 23 is a diagram illustrating one example of the configuration of GW-ECU 32200 according to Modification 3 of Embodiment 2. In Modification 3 of Embodiment 2, GW-ECU 32200 is one example of the anomaly detection system. GW-ECU 32200 is configured of communicator 1201, detection result manager 32202, detection result retainer 2203, transfer processor 1204, and vehicle state manager 32201.

Detection result manager 32202 obtains the detection result from the received message related with the detection result notified by communicator 1201, and stores the detection results in detection result retainer 2203 together with related information. Detection result manager 32202 also determines the detection result state of each ECU according to the content retained by detection result retainer 2203 and the state of the vehicle notified by vehicle state manager 32201, and transmits the detection result state message to communication ECU 2300 through communicator 1201. The message format of the detection result state message as one example is the same as that shown in FIG. 15.

Vehicle state manager 32201 determines the state of the vehicle in the in-vehicle network system, and notifies detection result manager 32202 of the determined state of the vehicle. For example, vehicle state manager 32201 determines whether the vehicle is driving or is stopped.

### [2.13 One example of flag processing sequence]

FIG. 24 is a diagram illustrating one example of the sequence related with flag setting according to Modification 3 of Embodiment 2. FIG. 24 shows one example of the sequence of processing of flagging according to the state of the vehicle when there is an ECU from which GW-ECU 32200 does not successfully receive the detection result within a predetermined time. For the same processing steps as those in Embodiments 1 and 2, identical reference signs will be given, and the description thereof will be omitted.

(S32202) GW-ECU 32200 determines whether the latest detection result is successfully received, and the processing goes to S32206 when the detection result received last time does not correspond to the latest detection result, that is, when the last detection result is old information.

(S32206) GW-ECU 32200 determines the state of the vehicle. Specifically, GW-ECU 32200 determines whether the vehicle is driving. Only when the vehicle is driving, the processing goes to S1203.

Thus, in Modification 3 of Embodiment 2, GW-ECU 32200 determines whether to associate the determination result with the detection result, according to the state of the vehicle.

### (Effects of Modification 3 of Embodiment 2)

By further using the state of the vehicle in combination to determine whether to associate the determination result with the detection result, the in-vehicle network system illustrated in Modification 3 of Embodiment 2 enables determination according to the damage when anomaly occurs, and thus can ensure the safety of the entire vehicle.

### (Other modifications)

Although the present disclosure has been described based on the embodiments and the modifications above described, needless to say, the present disclosure is not limited by the embodiments and the modifications. The present disclosure also covers the following cases.
(1) Although examples in which the Ethernet and CAN protocols are used as the in-vehicle networks have been described in the above embodiments, any other in-vehicle network can be used. For example, CAN with Flexible Data Rate (CAN-FD), Local Interconnect Network (LIN), Media Oriented Systems Transport (MOST), and the like can be used as in-vehicle networks. Alternatively, the in-vehicle network may have a network configuration including these networks combined as subnetworks.
(2) Although for the anomaly detection method by the detector and the detection result manager, some combinations have been described in the above embodiments, any other combination may be used. Physically separate ECUs may include the detector and the detection result manager, respectively, or the detector and the detection result manager may be included in the same ECU. Furthermore, one or a plurality of detectors and one or a plurality of detection result managers may be present, one detector and a plurality of detection result managers may be present, or a plurality of detectors and one detection result manager may be present. Furthermore, flag information (determination result) may be shared and added to the detection result state message by cooperation of a plurality of detection result managers included in one ECU or a plurality of highly related ECUs. In other words, when the detection result manager included in an ECU sets a flag to the detection result state message transmitted by the ECU, another detection result manager included in the ECU or another detection result manager included in a highly related ECU may set a flag identical to that set by the detection result manager included in the ECU.
(3) Although an example in which only the CAN and Ether detectors are included in the same ECU (specifically, GW-ECU 22200) has been described in the above embodiment, any other configuration can be used, and any combination including the detector for the system log is not excluded.
(4) Although an example in which the driving state is determined as the state of the vehicle has been described in the above embodiment, the driving state may be determined by a specific ECU, and other ECUs may obtain the driving state from the specific ECU through the in-vehicle network; or the ECUs may determine the driving state by themselves. Moreover, besides the state such as driving, stopping, or parking, the state such as an accessory ON, the ignition ON, driving at a low speed, or driving at a high speed may be determined as the state of the vehicle.
(5) Although an example in which a flag is set for each of the detectors has been described in the above embodiment, any other configuration can be used, and one flag may be collectively set for a plurality of detectors. Alternatively, a specific message code may be used rather than implementation of the flag.
(6) Although an example in which the communication error frequency is specified as the detection rule using the system log has been described in the above embodiment, any other detection rule can be used, and any detection method using a log output by the system is not excluded. For example, as the detection rule, a rule concerning a result of external port scan or a result of a failure in secure boot, which indicates that the system checks completeness during booting, may be used.
(7) Although an example in which the value of the payload or the transmission frequency is used as the anomaly detection method in the CAN or Ethernet communication message has been described in the above embodiments, any other configuration can be used, and any detection method using an in-vehicle communication message is not excluded. For example, the cycle or the payload change amount may be used.
(8) The devices in the above embodiments are specifically computer systems each configured of a microprocessor, a ROM, a RAM, a hard disk unit, a display, a keyboard, a mouse, and the like. The RAM or the hard disk unit has computer programs recorded thereon. By operation of the microprocessor according to the computer program, each device achieves the functions. Here, the computer program is configured of several command codes indicating instructions to the computer to achieve predetermined functions.
(9) In each of the devices in the above embodiments, part or all of the constitutional components may be configured of one system large scale integration (LSI, large scale integrated circuit). The system LSI is an ultra-multifunctional LSI manufactured by integrating a plurality of constitutional components onto a single chip, and specifically is a computer system including a microprocessor, a ROM, a RAM, and the like. The RAM has computer programs recorded thereon. By operation of the microprocessor according to the computer program, the system LSI achieves the functions.

The portions of the components constituting each of the devices may be individually formed into single chips, or part or all of the portions may be formed into a single chip.

Although the system LSI is used here, it may be referred to as IC, LSI, super LSI, or ultra LSI according to the difference in integration density in some cases. The method for integration of circuits is not limited to LSI, and the integration may be implemented by a dedicated circuit or a general purpose processor. A field programmable gate array (FPGA) programmable after manufacturing of LSI or a reconfigurable processor enabling reconfiguration of connections or settings of circuit cells inside the LSI may be used.

Furthermore, if any circuit integration technique replacing the LSI appears as a result of progress of semiconductor techniques or other techniques derived therefrom, the functional blocks should be integrated using such techniques. Bio techniques may be used as one of possibilities.

(10) Part or all of the components constituting each of the devices above may be configured of an IC card attachable to and detachable from each device or a single module. The IC card or the module is a computer system configured of a microprocessor, a ROM, a RAM, and the like. The IC card or the module may also include the ultra multifunctional LSI. By operation of the microprocessor according to the computer program, the IC card or the module achieves the functions. This IC card or module may have tamper proofness.

(11) The present disclosure may be the anomaly detection method illustrated above. Alternatively, the present disclosure may be a computer program causing a computer to implement the anomaly detection method, or may be digital signals configured of the computer program.

Alternatively, the present disclosure may be the computer program or digital signals recorded on a non-transitory computer-readable recording medium, such as a flexible disc, a hard disk, a CD-ROM, an MO, a DVD, a DVD-ROM, a DVD-RAM, a Blu-ray (BD, registered trademark) disc, or a semiconductor memory. Alternatively, the present disclosure may be digital signals recorded on these recording media.

Alternatively, the present disclosure may be the computer program or the digital signals transmitted through an electrical communication line, a wireless or wired communication line, a network such as the Internet, or data broadcasting.

Alternatively, the present disclosure may be a computer system including a microprocessor and a memory, the memory having a computer program recorded thereon, the microprocessor operating according to the computer program.

Alternatively, the present disclosure may be implemented by another independent computer system by recording the program or the digital signals on a recording medium and transferring the recording medium or by transferring the program or the digital signals through a network.

(12) The embodiments and the modifications may be combined.

### [Industrial Applicability]

The present disclosure can be used in in-vehicle network systems, for example.

### [Reference Signs List]

1000, 2000 in-vehicle network system
1001, 2001 vehicle
1100a, 1100b, 1100c, 11100a, 11100b, 11100c ECU
1011 brake
1012 wheel
1013 accelerator
1101, 1201, 1401, 2501, 22201 communicator
1102 message converter
1103, 11103, 2304, 2503 detector
1104, 2305, 2505, 22206, 22208 detection rule retainer
1200, 2200, 22200, 32200 GW-ECU
1202, 11105, 2202, 22202, 32202 detection result manager
1203, 11106, 2203 detection result retainer
1204 transfer processor
1300, 2300 communication ECU
1301, 2301 in-vehicle communicator
1302 converter
1303, 2303 off-board communicator
1400 server
1402 vehicle manager
2500 IVI
2502 display
22205 CAN detector
22207 Ether detector
32201 vehicle state manager
D1101 detection result header
D1102 detector ID
D1103 flag
D1104, D2104 detection result payload

## Claims

1. An anomaly detection method in an in-vehicle network system in which a plurality of electronic control units are connected,
wherein at least one electronic control unit among the plurality of electronic control units:
includes a detector which determines whether a received message satisfies a predetermined rule, and
transmits a detection result determined to a network,
the anomaly detection method comprising:
(i) receiving the detection result from the network, and storing the detection result received in a memory;
(ii) determining whether the detection result is received within a predetermined time, and storing a determination result in the memory in association with the detection result; and
(iii) outputting a message to an outside, the message including the detection result in association with the determination result.

2. The anomaly detection method according to claim 1,
wherein the (i) receiving includes periodically receiving the detection result from the network, and storing the detection result received in the memory each time, and
the (ii) determining includes storing the determination result in the memory in association with a detection result received last time when the detection result is not received within the predetermined time.

3. The anomaly detection method according to claim 2,
wherein the (i) receiving further includes storing the detection result received, in association with a time when the detection result was received, and
the (ii) determining includes determining whether the detection result received last time is a latest detection result, based on a time in association with the detection result received last time when the detection result is not received within the predetermined time, and storing the determination result in the memory in association with the detection result received last time when the detection result received last time is not the latest detection result.

4. The anomaly detection method according to any one of claims 1 to 3,
wherein the (ii) determining includes outputting the message including the detection result to the outside when the detection result is received within the predetermined time and the detection result indicates anomaly.

5. The anomaly detection method according to any one of claims 1 to 4,
wherein the at least one electronic control unit includes at least two electronic control units, and
the (ii) determining includes:
determining, for each of the at least two electronic control units, whether the detection result is received within the predetermined time; and
when the detection result is not received within the predetermined time from an electronic unit among the at least two electronic units, storing the determination result in the memory in association with a detection result about the electronic control unit.

6. The anomaly detection method according to claim 5,
wherein the message output to the outside in the (iii) outputting includes detection results of the at least two electronic control units and determination results in association with the detection results of the at least two electronic control units.

7. The anomaly detection method according to any one of claims 1 to 6, further comprising:
determining a state of a vehicle in the in-vehicle network system,
wherein the (ii) determining includes determining whether to associate the determination result with the detection result according to the state of the vehicle.

8. The anomaly detection method according to any one of claims 1 to 7,
wherein the network is an in-vehicle network through which the plurality of electronic control units transmit and receive messages.

9. The anomaly detection method according to any one of claims 1 to 7,
wherein the network is a network inside the at least one electronic control unit.

10. The anomaly detection method according to any one of claims 1 to 9,
wherein the detector determines whether a controller area network (CAN) message, an Ethernet (registered trademark) message, or a system log of an electronic control unit as the received message satisfies the predetermined rule.

11. A program causing a computer to execute the anomaly detection method according to any one of claims 1 to 10.

12. An anomaly detection system in an in-vehicle network system in which a plurality of electronic control units are connected,
wherein at least one electronic control unit among the plurality of electronic control units:
includes a detector which determines whether a received message satisfies a predetermined rule, and
transmits a detection result determined to a network, the anomaly detection system comprising:
a memory which stores the detection result received from the network;
a detection result manager which determines whether the detection result is received within a predetermined time, and stores a determination result in the memory in association with the detection result; and
a communicator which outputs a message to an outside, the message including the detection result in association with the determination result.
